(19) Europäisches Patentamt
European Patent Office
Office européen des brevets

(11) EP 4 704 242 A1

(12) EUROPEAN PATENT APPLICATION

(43) Date of publication:
04.03.2026 Bulletin 2026/10

(21) Application number: 25186343.7

(22) Date of filing: 30.06.2025

(51) International Patent Classification (IPC):
H01M 50/406 (2021.01)    H01M 50/417 (2021.01)
H01M 50/489 (2021.01)    H01M 50/491 (2021.01)
H01M 50/494 (2021.01)    H01M 10/0525 (2010.01)
B01D 69/02 (2006.01)    B01D 71/26 (2006.01)
C08J 5/18 (2006.01)

(52) Cooperative Patent Classification (CPC):
H01M 50/406; B01D 67/0027; B01D 67/003;
B01D 69/02; B01D 71/261; C08J 5/18;
H01M 50/417; H01M 50/489; H01M 50/491;
H01M 50/494; B01D 2325/20; B01D 2325/24;
H01M 10/0525

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 30.08.2024 KR 20240117382

(71) Applicant: SK IE Technology Co., Ltd.
Seoul 03188 (KR)

(72) Inventor: JUNG, In Hwa
Daejeon 34124 (KR)

(74) Representative: Prüfer & Partner mbB
Patentanwälte · Rechtsanwälte
Sohnckestraße 12
81479 München (DE)

(54) **POLYOLEFIN-BASED MICROPOROUS MEMBRANE, METHOD FOR MANUFACTURING THE SAME, AND SECONDARY BATTERY INCLUDING THE SAME**

(57) Provided are a polyolefin-based microporous membrane or method for manufacturing the same, a separator including the microporous membrane, and a secondary battery including the separator. The polyolefin-based microporous membrane according to an exemplary embodiment or the separator including the same includes a polyolefin, and has a gas permeability of $2.5\times10^{-5}$ Darcy or more (approx. $2.5\times10^{-5}$ $\mu m^2$ or more), a shrinkage rate in the transverse direction (TD) at 120°C of 10% or less, and a BDV index represented by the following Equation 1 of 15 or more:

[Equation 1]

$$\text{BDV index} = \left(\frac{(P^2 + \sqrt[4]{M})}{D \times \sqrt{d} \times \sqrt{\varepsilon}}\right) \times 100$$

(P: perforation strength (N/um) of the polyolefin-based microporous membrane; M: viscosity average molecular weight ($\times10^5$ g/mol) of polyolefin; D: gas permeability ($\times10^{-5}$ Darcy; approx. $\times10^{-5}$ $\mu m^2$) of the polyolefin-based microporous membrane; d: average pore size (nm) of the polyolefin-based microporous membrane; and $\varepsilon$: porosity of the polyolefin-based microporous membrane.)

FIG. 1

EP 4 704 242 A1

**Description**

## TECHNICAL FIELD

The following disclosure relates to a polyolefin-based microporous membrane, a method for manufacturing the same, and a secondary battery including the same.

## BACKGROUND

There is a rapidly growing interest in electrochemical devices used in mobile phones, laptops, electric vehicles, among others, and related energy storage technology. In particular, research on improving the properties of a separator, one of the main constituent elements governing the characteristics of a secondary battery as the primary electrochemical device, is actively pursued. Since the separator is impregnated with an electrolyte and serves as an ion-conductive channel, it has a large influence on the physical properties of the secondary battery.

A polyolefin-based microporous membrane is typically used as a separator for a secondary battery, since it provides a hole-closing function, which allows to ensure sufficient ion permeability and excellent electrical insulation and which is intended to cut off current flow when an abnormal temperature rise occurs inside a battery, thereby mitigating an excessive temperature rise.

However, when the polyolefin-based microporous membrane is heated to a high temperature exceeding a melting point, it shrinks, which, in turn, may lead to irreversible breakage and battery failure. Hence, research to improve heat resistance of a microporous membrane for use as a separator in a battery device is required.

## SUMMARY

An object of the present disclosure relates to providing a polyolefin-based microporous membrane, a separator including the microporous membrane, and a secondary battery including the separator.

Another object of the present disclosure relates to a method for manufacturing the polyolefin-based microporous membrane according to the above object.

In one general aspect, a polyolefin-based microporous membrane includes a polyolefin-based resin, wherein the polyolefin-based microporous membrane has a gas permeability of $2.5 \times 10^{-5}$ Darcy or more (approx. $2.5 \times 10^{-5}$ $\mu m^2$ or more), a shrinkage rate in the transverse direction (TD) at 120°C of 10% or less, and a BDV index, represented by the following Equation 1, of 15 or more:

[Equation 1]

$$\text{BDV index} = \left( \frac{(P^2 + \sqrt[4]{M})}{D \times \sqrt{d} \times \sqrt{\varepsilon}} \right) \times 100$$

wherein P: perforation strength (N/um) of the polyolefin-based microporous membrane; M: viscosity average molecular weight ($\times 10^5$ g/mol) of a polyolefin; D: gas permeability ($\times 10^{-5}$ Darcy; approx. $\times 10^{-5}$ $\mu m^2$) of the polyolefin-based microporous membrane; d: average pore size (nm) of the polyolefin-based microporous membrane; and $\varepsilon$: porosity of the polyolefin-based microporous membrane.

In an exemplary embodiment, the polyolefin-based resin may have a viscosity average molecular weight (Mv) of $3 \times 10^5$ g/mol to $50 \times 10^5$ g/mol.

In an exemplary embodiment, the polyolefin-based microporous membrane may have a break-down voltage (BDV) to an average thickness of 0.13 kV/um or more, the break-down voltage being measured in accordance with ASTM D149.

In an exemplary embodiment, the polyolefin-based microporous membrane may have a perforation strength of 0.4 N/$\mu$m or more.

In an exemplary embodiment, the porosity $\varepsilon$ of the polyolefin-based microporous membrane may be calculated by the following Equation 2, using mass (m, unit: g) measured after cutting the polyolefin-based microporous membrane into a rectangular shape of which length $\times$ width is A cm $\times$ B cm (thickness: T, unit: $\mu$m), and density ($\rho$, unit: g/cm$^3$) of polyolefin:

[Equation 2]

$$\text{Porosity } \varepsilon = \{1-(m \times 10000)/(A \cdot B \cdot T \cdot \rho)\}.$$

In an exemplary embodiment, the polyolefin-based microporous membrane may have a porosity ε of 0.2 or more (i.e., of 20% or more).

In an exemplary embodiment, the polyolefin-based microporous membrane may have a thickness of 3 μm to 20 μm.

In an exemplary embodiment, the polyolefin-based microporous membrane may have an average pore size of 10 nm to 100 nm as measured in accordance with ASTM F316-03.

In an exemplary embodiment, the polyolefin-based microporous membrane may have a shrinkage rate in the machine direction (MD) at 120°C of 10% or less.

In another general aspect, a method for manufacturing a polyolefin-based microporous membrane includes: kneading a polyolefin-based resin and a diluent to prepare a molten material; molding the molten material into a sheet form; and stretching the molded sheet and then extracting the diluent, wherein the polyolefin-based microporous membrane has a gas permeability of $2.5 \times 10^{-5}$ Darcy or more (approx. $2.5 \times 10^{-5}$ μm$^2$ or more), a shrinkage rate in the transverse direction (TD) at 120°C of 10% or less, and a BDV index, represented by the following Equation 1, of 15 or more:

[Equation 1]

$$\text{BDV index} = \left(\frac{(P^2 + \sqrt[4]{M})}{D \times \sqrt{d} \times \sqrt{\varepsilon}}\right) \times 100$$

wherein P: perforation strength (N/um) of the polyolefin-based microporous membrane; M: viscosity average molecular weight ($\times 10^5$ g/mol) of a polyolefin; D: gas permeability ($\times 10^{-5}$ Darcy; approx. $\times 10^{-5}$ μm$^2$) of the polyolefin-based microporous membrane; d: average pore size (nm) of the polyolefin-based microporous membrane; and ε: porosity of the polyolefin-based microporous membrane.

In an exemplary embodiment, the stretching of the molded sheet may include stretching 6 fold to 15 fold in the machine direction (MD) at a temperature of 60°C to 130°C.

In an exemplary embodiment, the stretching of the molded sheet may further include stretching 6 fold to 15 fold in the transverse direction (TD) at a temperature of 80°C to 130°C.

In an exemplary embodiment, a stretching ratio (MD/TD) in the machine direction (MD) and the transverse direction (TD) may be less than 1.0.

In an exemplary embodiment, the method for manufacturing a polyolefin-based microporous membrane may further include drying, after the extracting of the diluent.

In an exemplary embodiment, after the extracting of the diluent, heat fixing at a temperature of 100°C to 150°C may be further included.

In an exemplary embodiment, the polyolefin-based microporous membrane may be a separator.

In another general aspect, a separator includes a polyolefin-based microporous membrane, wherein the polyolefin-based microporous membrane includes a polyolefin, and has a gas permeability of $2.5 \times 10^{-5}$ Darcy or more (approx. $2.5 \times 10^{-5}$ μm$^2$ or more), a shrinkage rate in the transverse direction (TD) at 120°C of 10% or less, and a BDV index, represented by the following Equation 1, of 15 or more:

[Equation 1]

$$\text{BDV index} = \left(\frac{(P^2 + \sqrt[4]{M})}{D \times \sqrt{d} \times \sqrt{\varepsilon}}\right) \times 100$$

wherein P: perforation strength (N/um) of the polyolefin-based microporous membrane; M: viscosity average molecular weight ($\times 10^5$ g/mol) of a polyolefin; D: gas permeability ($\times 10^{-5}$ Darcy; approx. $\times 10^{-5}$ μm$^2$) of the polyolefin-based microporous membrane; d: average pore size (nm) of the polyolefin-based microporous membrane; and ε: porosity of the polyolefin-based microporous membrane.

In still another general aspect, a secondary battery includes the separator according to the above exemplary embodiment.

Other features and aspects will be apparent from the following detailed description, the drawings, and the claims.

## BRIEF DESCRIPTION OF THE DRAWINGS

FIG. 1 is a schematic plan view of a secondary battery according to an exemplary embodiment.

FIG. 2 is a schematic cross-sectional view of a secondary battery according to an exemplary embodiment.

FIG. 3 is a graph which may confirm a correlation between a BDV index and a break-down voltage (kV/$\mu$m) value to an average thickness.

[Detailed Description of Main Elements]

| 100: | Positive electrode |
|------|--------------------|
| 105: | Positive electrode current collector |
| 107: | Positive electrode lead |
| 110: | Positive electrode active material layer |
| 120: | Negative electrode active material layer |
| 125: | Negative electrode current collector |
| 127: | Negative electrode lead |
| 130: | Negative electrode |
| 140: | Separator |
| 150: | Electrode assembly |
| 160: | Case |

## DETAILED DESCRIPTION OF EMBODIMENTS

Since the embodiments described in the present specification may be modified in many different forms, the technology according to an implementation is not limited to the embodiments set forth herein. Furthermore, throughout the specification, unless otherwise particularly stated, the word "comprising", "including", "containing", "being provided with", or "having" does not mean the exclusion of any other constituent element, but rather means further inclusion of other constituent elements, and elements, materials, or processes which are not further listed are not excluded.

The numerical range used in the present specification includes all values within the range including the lower limit and the upper limit, increments logically derived from the form and spanning of a defined range, all double limited values, and all possible combinations of the upper limit and the lower limit in the numerical range defined in different forms. As an example, when it is defined that a content of a composition is 10% to 80% or 20% to 50%, it should be interpreted that a numerical range of 10% to 50% or 50% to 80% is also described in the specification of the present specification. Unless otherwise defined in the present specification, values which may be outside a numerical range due to experimental error or rounding off of a value are also included in the defined numerical range.

Hereinafter, unless otherwise particularly defined in the present specification, "about" may be considered as a value within 30%, 25%, 20%, 15%, 10%, 5%, 3%, 2%, 1%, or 0.5% of a stated value.

Hereinafter, the present disclosure will be described in detail (with reference to the accompanying drawings). However, it is only illustrative, and the present disclosure is not limited to the specific embodiments which are illustratively described in the present disclosure.

An exemplary embodiment provides a polyolefin-based resin having excellent membrane strength and permeability and simultaneously high insulation properties. Specifically, the polyolefin-based microporous membrane according to an exemplary embodiment includes a polyolefin-based resin, wherein the polyolefin-based microporous membrane has a gas permeability of $2.5 \times 10^{-5}$ Darcy or more (approx. $2.5 \times 10^{-5}$ $\mu m^2$ or more), a shrinkage rate in the transverse direction (TD) at 120°C of 10% or less, and a BDV index, represented by the following Equation 1, of 15 or more:

[Equation 1]

$$\text{BDV index} = \left( \frac{(P^2 + \sqrt[4]{M})}{D \times \sqrt{d} \times \sqrt{\varepsilon}} \right) \times 100$$

wherein P: perforation strength (N/um) of the polyolefin-based microporous membrane,

M: viscosity average molecular weight ($\times 10^5$ g/mol) of a polyolefin,

D: gas permeability ($\times 10^{-5}$ Darcy; approx. $\times 10^{-5}$ $\mu m^2$) of the polyolefin-based microporous membrane,

d: average pore size (nm) of the polyolefin-based microporous membrane, and

$\varepsilon$: porosity of the polyolefin-based microporous membrane.

The means of the polyolefin-based microporous membrane according to an exemplary embodiment is not particularly limited as long as the gas permeability, the shrinkage rate in the transverse direction (TD), and the BDV index, as defined above, are satisfied simultaneously, and for example, they may be satisfied by various variables of the composition or the manufacturing method of the polyolefin-based microporous membrane.

In an exemplary embodiment, the gas permeability may be $2.6 \times 10^{-5}$ Darcy or more (approx. $2.6 \times 10^{-5}$ $\mu m^2$ or more), $2.7 \times 10^{-5}$ Darcy or more (approx. $2.7 \times 10^{-5}$ $\mu m^2$ or more), $2.9 \times 10^{-5}$ Darcy or more (approx. $2.9 \times 10^{-5}$ $\mu m^2$ or more), or $3.0 \times 10^{-5}$ Darcy or more (approx. $3.0 \times 10^{-5}$ $\mu m^2$ or more). Herein, though the upper limit is not particularly limited, it may be, for example, $5.0 \times 10^{-5}$ Darcy or less (approx. $5.0 \times 10^{-5}$ $\mu m^2$ or less), $4.5 \times 10^{-5}$ Darcy or less (approx. $4.5 \times 10^{-5}$ $\mu m^2$ or less), $4.2 \times 10^{-5}$ Darcy or less (approx. $4.2 \times 10^{-5}$ $\mu m^2$ or less), $4.0 \times 10^{-5}$ Darcy or less (approx. $4.0 \times 10^{-5}$ $\mu m^2$ or less), $3.8 \times 10^{-5}$ Darcy or less (approx. $3.8 \times 10^{-5}$ $\mu m^2$ or less), or $3.5 \times 10^{-5}$ Darcy or less (approx. $3.5 \times 10^{-5}$ $\mu m^2$ or less). In an exemplary embodiment, the gas permeability may be measured using a CFP-1500-AEL available from PMI which is a porosity meter. The gas permeability according to an exemplary embodiment is calculated through the following Darcy's permeability constant (C), as an average value of the Darcy's permeability constant in a range of 100 psi to 200 psi:

[Mathematical Formula 2]

$$C = (8F \times T \times V) / [\pi D^2 (P^2 - 1)]$$

wherein C: Darcy's permeability constant,

F: flow velocity (cc/min),

T: thickness of the microporous membrane (mm),

V: viscosity of gas ($N_2$) (0.185 cP),

D: diameter of microporous membrane (mm), and

P: pressure (psi).

In an exemplary embodiment, the shrinkage rate in the transverse direction (TD) at 120°C may be 9.5% or less, 9% or less, 8.5% or less, or 8% or less. Herein, though the lower limit is not particularly limited, it may be, for example, 2% or more, 3% or more, 4% or more, or 4.5% or more. In an exemplary embodiment, the shrinkage rate in the transverse direction (TD) may be calculated according to the following Equation 4, by cutting the microporous membrane into a size of 15 cm $\times$ 15 cm, marking the membrane at 10 cm intervals in the machine direction (MD) and in the transverse direction (TD), putting the membrane between A4 papers, placing the membrane in an oven (Yamato, DKN612) preheated to a constant temperature of 120°C, leaving the membrane for 1 hour inside the oven at 120°C, and measuring a change in intervals:

Shrinkage rate = 100 $\times$ (initial interval - interval after leaving at 120°C) / initial interval          [Mathematical Formula 4]

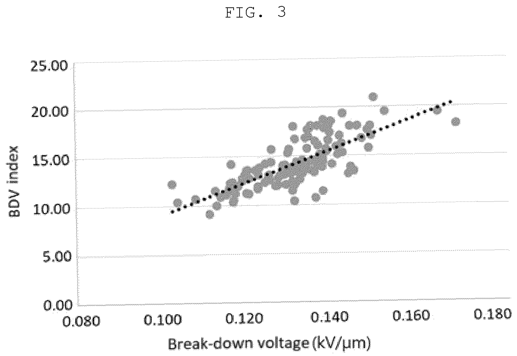

In an exemplary embodiment, the BDV index may be 15.2 or more, 15.3 or more, 15.5 or more, 15.6 or more, 16.0 or more, or 19.0 or more. Herein, though the upper limit is not particularly limited, it may be, for example, 25.0 or less, 22.0 or less, 20.0 or less, or 19.5 or less. The BDV index according to an exemplary embodiment is a novel parameter which is first provided in the present application, and the present inventors confirmed that the BDV index has a correlation proportional to a break-down voltage (kV/$\mu m$) value to an average thickness, that is, as the BDV index increases, there is a strong tendency for the break-down voltage to increase. In particular, as a result of collecting experimental values using a plurality of polyolefin-based microporous membranes, it was confirmed that when the BDV index is 15 or more, the break-down voltage of 0.13 kV/um or more may be implemented (FIG. 3). Therefore, the break-down voltage of the polyolefin-based microporous membrane according to an exemplary embodiment is implemented as 0.13 kV/um or more by implementing the BDV index of 15 or more, and thus, the insulation properties may be excellent.

In an exemplary embodiment, the polyolefin-based (PO) resin may have a viscosity average molecular weight (Mv) of $3\times10^5$ g/mol to $50\times10^5$ g/mol, $3\times10^5$ g/mol to $40\times10^5$ g/mol, $3\times10^5$ g/mol to $30\times10^5$ g/mol, $3\times10^5$ g/mol to $20\times10^5$ g/mol, $5\times10^5$ g/mol to $20\times10^5$ g/mol, or $6\times10^5$ g/mol to $20\times10^5$ g/mol. In an exemplary embodiment, when the viscosity average molecular weight of the polyolefin-based resin is lower than $3\times10^5$ g/mol, though not necessarily limited thereto, there may be a limitation in increasing strength during manufacture of the microporous membrane even when an elongation ratio is increased, and as a result, the BDV index of 15 or more may not be implemented. In addition, when the viscosity average molecular weight of the polyolefin-based resin is higher than $50\times10^5$ g/mol or higher than $30\times10^5$ g/mol, it is difficult to effectively secure kneadability during extrusion, and it may be difficult to manufacture a uniform microporous membrane.

In an exemplary embodiment, the viscosity average molecular weight of the polyolefin-based resin may be calculated from the Margolies equation of the following Mathematical Formula 1, after measuring an intrinsic viscosity ($\eta$) with a Crystex® model (solvent: trichlorobenzene (TCB)) available from Polymer Char at 145°C:

$$\text{Viscosity average molecular weight (Mv)} = 5.37 \times 10^4 \times [\eta]^{1.49}. \hspace{2cm} \text{[Mathematical Formula 1]}$$

In an exemplary embodiment, the polyolefin-based resin may include, for example, polyethylene (or polyethylene-based copolymer) or polypropylene (or polypropylene-based copolymer). Otherwise, for example, the polyolefin-based resin may include a mixture of a polyethylene and a polypropylene having different viscosity average molecular weights, and the polyethylene and the polypropylene may include a first polyethylene and a first polypropylene which have relatively high molecular weights, and a second polyethylene and a second polypropylene having relatively low molecular weight, respectively. In an exemplary embodiment, when the polyolefin-based resin includes both a polyethylene and a polypropylene, the weight ratio may be, for example, 10:90 to 90:10, 30:70 to 70:30, 40:60 to 60:40, 30:70 to 40:60, or 60:40 to 70:30. Otherwise, according to an exemplary embodiment, only the polyethylene may be used alone as the polyolefin resin.

In an exemplary embodiment, a melting temperature of the polyolefin-based resin (polyethylene, polypropylene, or a mixture thereof) is not particularly limited, but may be, for example, 100°C to 180°C, 110°C to 180°C, 100°C to 150°C, 110°C to 140°C, 120°C to 140°C, 120°C to 135°C, 120°C to 180°C, 130°C to 180°C, 130°C to 170°C, 140°C to 170°C, or 145°C to 165°C.

In an exemplary embodiment, the polyolefin-based microporous membrane may have the break-down voltage (BDV) to an average thickness of 0.13 kV/um or more, 0.135 kV/um or more, 0.14 kV/um or more, or 0.15 kV/um or more. Herein, though the upper limit is not particularly limited, for example, it may be 0.3 kV/um or less, 0.25 kV/um or less, 0.2 kV/um or less, 0.18 kV/um or less, 0.17 kV/um or less, or 0.16 kV/um or less.

In an exemplary embodiment, the break-down voltage may be measured in accordance with ASTM D149, and specifically, may be a value calculated by placing the microporous membrane between electrodes of a withstand voltage tester (Croma, 19052 model) under a dry room (dew point temperature: -60°C), measuring a voltage (kV) when a leakage current value measured under the conditions of increasing an applied voltage to 5 kV/10 sec is 5 mA, and dividing the voltage by an average thickness. Herein, the average thickness may be obtained by overlapping the microporous membrane in 8 layers, measuring each thickness at 5 random points in the TD direction by a thickness meter available from Mitutoyo, dividing the value by 5 to derive an average thickness of the 8-layer microporous membrane, and dividing the value by 8 again to derive an average thickness of a single microporous membrane.

In an exemplary embodiment, the polyolefin-based microporous membrane may have a perforation strength of 0.4 N/$\mu$m or more, 0.45 N/$\mu$m or more, 0.5 N/$\mu$m or more, 0.53 N/$\mu$m or more, 0.54 N/$\mu$m or more, or 0.55 N/$\mu$m or more. Herein, though the upper limit is not particularly limited, it may be, for example, 1.0 N/$\mu$m or less, 0.8 N/$\mu$m or less, 0.7 N/$\mu$m or less, 0.65 N/$\mu$m or less, or 0.6 N/$\mu$m or less.

In an exemplary embodiment, the perforation strength may be a value measured at a speed of 120 mm/min with Universal Test Machine (UTM) 3345 available from INSTRON, using a pin tip having a diameter of 1.0 mm and a radius of curvature of 0.5 mm.

In an exemplary embodiment, the porosity $\varepsilon$ of the polyolefin-based microporous membrane may be calculated by the following Equation 2, using mass (m, unit: g) measured after cutting the polyolefin-based microporous membrane into a rectangular shape of which length $\times$ width is A cm $\times$ B cm (thickness: T, unit: $\mu$m), and density ($\rho$, unit: g/cm$^3$) of the polyolefin:

[Equation 2]

Porosity ε = {1-(m × 10000)/(ABTρ)}.

Herein, the porosity ε may be, for example, 0.2 (20%) or more, 0.25 (25%) or more, 0.3 (30%) or more, 0.35 (35%) or more, or 0.4 (40%) or more. Herein, though the upper limit is not particularly limited, it may be, for example, 0.7 (70%) or less, 0.6 (60%) or less, 0.5 (50%) or less, or 0.45 (45%) or less.

In an exemplary embodiment, the polyolefin-based microporous membrane may have a thickness of, for example, 3 μm to 20 μm, 3 μm to 15 μm, 5 μm to 15 μm, or 6 μm to 12 μm. In an exemplary embodiment, the thickness may be measured using a TESA Micro-Hite Electronic Gauge available from TESA which is a contact type thickness gauge with a precision degree of 0.1 μm under measurement pressure conditions of 0.63 N. The polyolefin-based microporous membrane according to an exemplary embodiment may implement high strength and thermal safety even at a small thickness by combining so that the gas permeability, the shrinkage rate in the transverse direction (TD) at 120°C, and the BDV index of the polyolefin-based microporous membrane are satisfied simultaneously.

In an exemplary embodiment, the polyolefin-based microporous membrane may have an average pore size of 10 nm to 100 nm, 10 nm to 80 nm, 20 nm to 80 nm, 20 nm to 60 nm, 30 nm to 50 nm, or 35 nm to 45 nm. In an exemplary embodiment, the average pore size may be measured using a CFP-1500-AEL available from PMI which is a porosimeter in accordance with ASTM F316-03. Specifically, it may be measured by a half dry method, and a Galwick solution (surface tension: 15.9 dyne/cm) provided by PMI may be used.

In an exemplary embodiment, the polyolefin-based microporous membrane may have a shrinkage rate in the machine direction (MD) at 120°C of 10% or less, 9% or less, 8.5% or less, 8% or less, or 7.5% or less. Herein, though the lower limit is not particularly limited, it may be, for example, 2% or more, 3% or more, 4% or more, or 5% or more. In an exemplary embodiment, the shrinkage rate in the machine direction (MD) may be calculated according to the following Equation 4, by cutting the microporous membrane into a size of 15 cm×15 cm, marking the membrane at 10 cm intervals in the machine direction (MD) and in the transverse direction (TD), putting the membrane between papers, placing the membrane in an oven (Yamato, DKN612) of which the temperature is stabilized to 120°C, leaving the membrane for 1 hour, and measuring a change in intervals:

Shrinkage rate = 100 × (initial interval - interval after leaving at 120°C) / initial interval        [Mathematical Formula 4]

Machine Direction (MD) refers to the direction in which the product is manufactured. It is the axis that aligns with the operating direction of the machine, indicating the primary direction in which the raw material is processed or fabricated.

Transverse Direction (TD) refers to the direction perpendicular to the Machine Direction (MD). It is the horizontal direction of the product, intersecting the machine direction at a right angle.

Another exemplary embodiment provides a method for manufacturing a polyolefin-based microporous membrane including:

kneading a polyolefin-based resin and a diluent to prepare a molten material;
molding the molten material into a sheet form; and
stretching the molded sheet and then extracting the diluent, wherein the polyolefin-based microporous membrane has a gas permeability of $2.5×10^{-5}$ Darcy or more (approx. $2.5×10^{-5}$ μm$^2$ or more), a shrinkage rate in the transverse direction (TD) at 120°C of 10% or less, and a BDV index of Equation 1 is 15 or more.

In an exemplary embodiment, since the above description for the polyolefin-based microporous membrane may be applied identically, redundant description will be omitted.

In an exemplary embodiment, a weight ratio between the polyolefin-based resin and the diluent may be, for example, 5:95 to 50:50, 10:90 to 50:50, 10:90 to 40:60, 10:90 to 35:65, or 15:85 to 40:60.

In an exemplary embodiment, the stretching of the molded sheet may include stretching 6 fold to 15 fold in the machine direction (MD) at a temperature of 60°C to 130°C. Herein, the temperature conditions may be, for example, 60°C to 120°C, 60°C to 110°C, 60°C to 100°C, 60°C to 95°C, 60°C to 90°C, 70°C to 100°C, 70°C to 95°C, 80°C to 100°C, or 80°C to 95°C. In addition, the stretching ratio may be, for example, 6 fold to 13 fold, 6 fold to 12 fold, 6 fold to 10 fold, 7 fold to 12 fold, 7 fold to 10 fold, 8 fold to 12 fold, or 8 fold to 10 fold.

In an exemplary embodiment, though the stretching temperature in the machine direction (MD) is not necessarily limited, it may be set to a temperature lower than the melting temperature of the sheet manufactured in the step of molding the extruded molten material into a sheet form by about 30°C or more. When the stretching temperature in the machine direction (MD) is set to a temperature lower than the melting temperature of the manufactured sheet by less than 30°C, the shrinkage rate in the transverse direction (TD) at 120°C is implemented as 10% or less and simultaneously it may be difficult to implement the gas permeability of $2.5 \times 10^{-5}$ Darcy or more (approx. $2.5 \times 10^{-5}$ $\mu m^2$ or more).

In an exemplary embodiment, the melting temperature of the sheet manufactured in the step of molding the extruded molten material into a sheet form may be determined from a peak position in a curve measured using a differential scanning calorimetry (DSC). Specifically, scanning was performed in a temperature range from 25°C to 200°C at a heating rate of 10°C/min under a nitrogen atmosphere, using a Thermal Analysis System DSC 3+ model which is a differential scanning calorimeter (DSC) available from Mettler Toledo. Herein, the amount of the measurement sample was 5 mg and the melting temperature was defined as a temperature showing a peak amount of heat. In an exemplary embodiment, though the melting temperature of the sheet is not particularly limited, it may be, for example, 100°C to 150°C, 120°C to 140°C, 120°C to 130°C, or about 120°C.

In an exemplary embodiment, the stretching of the molded sheet may further include stretching 6 fold to 15 fold in the transverse direction (TD) at a temperature of 80°C to 130°C after the stretching in the machine direction (MD). Herein, the temperature conditions may be, for example, 80°C to 130°C, 90°C to 130°C, 90°C to 120°C, or 100°C to 120°C.

In addition, the stretching ratio may be, for example, 7 fold to 15 fold, 7 fold to 13 fold, 8 fold to 12 fold, or 9 fold to 11 fold.

In an exemplary embodiment, the stretching in the transverse direction (TD) may include 2 or 3 or more stretching sections, and may include, for example, a PH section, a ST section, and a HS section in order. Herein, the PH (pre-heating) section is a section of applying heat to the longitudinally stretched sheet without stretching, the ST (stretching) section is a section of stretching in the transverse direction (TD) by applying heat to a sheet, and the HS (heat-setting) section is a section of applying heat to a stretched film without stretching/relaxation. Herein, the temperature of the ST section may be set to a melting temperature or lower of the sheet after stretching in the machine direction (MD). The temperature of the PH section may be set to be lower than the temperature of the ST section, and may be, for example, set to be lower by 1°C to 5°C, 1°C to 3°C, or about 2°C. The temperature of the HS section may be set to be higher than the temperature of the ST section, and may be, for example, set to be higher by 1°C to 5°C, 2°C to 4°C, or about 3 °C. When the temperatures are set in each section, the pores of the microporous membrane may be implemented to be smaller. Specifically, for example, the temperature of the PH section may be set to a range of 110°C to 130°C, 110°C to 125°C, or 115°C to 125°C, the temperature of the ST section may be set to a range of 115°C to 135°C, 115°C to 130°C, or 120°C to 130°C, and the temperature of the HS section may be set to a range of 120°C to 140°C, 120°C to 135°C, or 120°C to 130°C.

In an exemplary embodiment, the stretching ratio (MD/TD) in the machine direction (MD) and the transverse direction (TD) may be less than 1.0, 0.95 or less, 0.9 or less, or 0.89 or less. Herein, though the lower limit is not limited, it may be, for example, 0.5 or more, 0.6 or more, 0.7 or more, 0.8 or more, or 0.82 or more. In an exemplary embodiment, when the stretching ratio (MD/TD) is more than the upper limit, it may be difficult to implement the shrinkage rate in the transverse direction (TD) at 120°C as 10% or less.

In an exemplary embodiment, the preparing of a molten material may be, specifically, a step of melting and kneading a polyolefin-based resin and a diluent through an extruder to prepare a molten material which is a thermodynamically single phase.

In an exemplary embodiment, the type of diluent is not particularly limited, and may be any organic compound which forms a single phase with the polyolefin-based resin (or a mixture of the polyolefin-based resin and other types of resins) during extrusion. A non-limiting example of the diluent may include, for example, aliphatic or cyclic hydrocarbons such as liquid paraffin including nonane, decane, decaline, and liquid paraffin (or paraffin oil), and paraffin wax; phthalate ester such as dibutyl phthalate and dioctyl phthalate; fatty acids having 10 to 20 carbon atoms such as palmitic acid, stearic acid, oleic acid, linoleic acid, and linolenic acid; fatty acid alcohols having 10 to 20 carbon atoms such as palmitic alcohol, stearic alcohol, and oleic alcohol; and the like. They may be used alone or in combination of two or more, and specifically, among the diluents, liquid paraffin which is an example of a low-molecular weight organic material having the similar molecular structure to polyolefin may be used.

In an exemplary embodiment, a drying step may be further included after the extracting of the diluent.

In an exemplary embodiment, after the extracting of the diluent or the drying, a heat treatment step may be further included. The heat treatment step may include stretching, heat fixation, and/or relaxation steps. In an exemplary embodiment, the heat treatment step or the heat fixation step may be performed at a temperature of 100°C to 150°C. The temperature condition may be, for example, 110°C to 150°C, 120°C to 150°C, or 130°C to 140°C. Herein, the temperature of the heat treatment or heat fixation step may be set to a temperature lower than the melting temperature of the extracted and/or dried film by 3°C to 20°C, or by 5°C to 10°C. When the temperature is higher than the above range, it may be difficult to implement the gas permeability of $2.5 \times 10^{-5}$ Darcy or more (approx. $2.5 \times 10^{-5}$ $\mu m^2$ or more), and when it is lower than the range, it may be difficult to implement the shrinkage rate in the transverse direction (TD) at 120°C as 10% or less. Herein, the melting temperature may be measured by the method described above.

In an exemplary embodiment, when the heat treatment step includes the stretching/heat fixation/relaxation step, 1.3 fold to 3 fold, 1.3 fold to 2 fold, or 1.5 fold to 2 fold stretching may be performed in the stretching step, and when it is not satisfied, it may be difficult to implement the gas permeability of $2.5 \times 10^{-5}$ Darcy or more (approx. $2.5 \times 10^{-5}$ $\mu m^2$ or more). In addition, in the relaxation step, 0.5 fold to 0.95 fold, 0.7 fold to 0.95 fold, 0.8 fold to 0.95 fold, or 0.8 fold to 0.9 fold relaxation may be performed, and when it is not satisfied, it may be difficult to implement the shrinkage rate in the transverse direction (TD) at 120°C as 10% or less.

The polyolefin-based microporous membrane may be a separator. Specifically, the polyolefin-based microporous membrane may be a separator for a secondary battery.

Another exemplary embodiment provides a separator including a polyolefin-based microporous membrane, wherein the polyolefin-based microporous membrane includes a polyolefin, has a gas permeability of $2.5 \times 10^{-5}$ Darcy or more (approx. $2.5 \times 10^{-5}$ $\mu m^2$ or more), a shrinkage rate in the transverse direction (TD) at 120°C of 10% or less, and a BDV index, as defined by Equation 1, of 15 or more.

In an exemplary embodiment, since the above description for the polyolefin-based microporous membrane included in the separator may be applied identically, redundant description will be omitted.

In an exemplary embodiment, the separator may be specifically a separator for a secondary battery.

The separator according to an exemplary embodiment implements insulation properties excellently by satisfying the gas permeability, the shrinkage rate in the transverse direction (TD), and the BDV index simultaneously, a side reaction due to an electrode volume change inside a battery and/or formation of dendrite in a negative electrode may be effectively prevented even when the battery is repeatedly charged and discharged. In addition, since the separator according to an exemplary embodiment has a high break-down voltage, local damage of the separator may be effectively prevented even when overvoltage is applied from the outside like overcharging, and thus, a phenomenon of leakage current occurring by a damaged separator may be suppressed.

Another example embodiment provides a secondary battery including the separator according to an example embodiment.

In an exemplary embodiment, the secondary battery may include the separator according to an exemplary embodiment, a positive electrode; a negative electrode opposite to the positive electrode; and an electrolyte solution.

In an exemplary embodiment, the secondary battery may have an initial electrical resistance of 54 m$\Omega$ or less or 53 m$\Omega$ or less, and though the lower limit is not particularly limited, it may be, for example, 30 m$\Omega$ or more, 35 m$\Omega$ or more, 40 m$\Omega$ or more, or 50 m$\Omega$ or more. In an exemplary embodiment, the thickness-normalized initial electrical resistance of the secondary battery may be about 6.6 m$\Omega/\mu m$ or less.

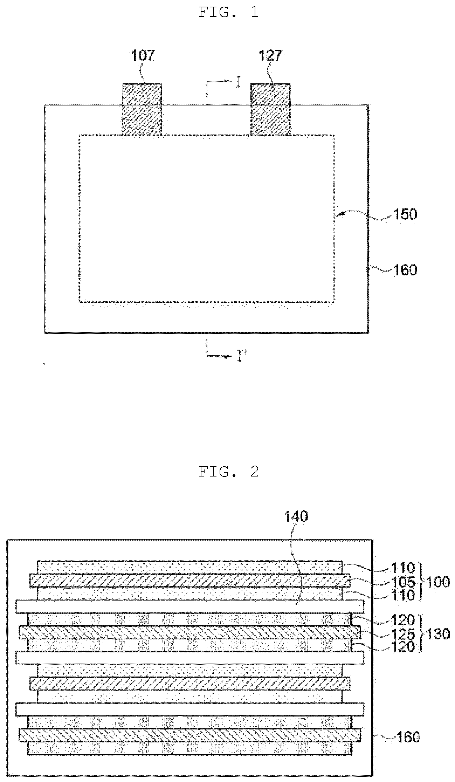

FIGS. 1 and 2 are schematic plan view and cross-sectional view showing the secondary batteries according to exemplary embodiments, respectively. For example, FIG. 2 is a cross-sectional view taken along the line I-I' of FIG. 1.

Referring to FIGS. 1 and 2, the secondary battery may include a positive electrode 100 and a negative electrode 130 opposite to the positive electrode 100.

The positive electrode 100 may include a positive electrode current collector 105 and a positive electrode active material layer 110 on the positive electrode current collector 105.

The positive electrode active material layer 110 may include a positive electrode active material, and, if necessary, a positive electrode binder and a conductive material.

The positive electrode 100 may be manufactured by, for example, mixing a positive electrode active material, a positive electrode binder, a conductive material, a dispersion medium, and the like and stirring to prepare a positive electrode slurry, and applying the slurry on the positive electrode current collector 105, drying, and rolling.

The positive electrode current collector 105 may include, for example, stainless steel, nickel, aluminum, titanium, copper, or an alloy thereof, and more preferably, may include aluminum or an aluminum alloy.

In an exemplary embodiment, the secondary battery may be a lithium secondary battery, and may be, for example, a lithium metal secondary battery, a lithium-ion secondary battery, a lithium polymer secondary battery, a lithium ion polymer secondary battery, or the like.

Hereinafter, the secondary battery according to an exemplary embodiment will be schematically described.

[Positive electrode]

A positive electrode may include a positive electrode current collector, and a positive electrode mixture layer placed on at least one surface of the positive electrode current collector.

(Positive electrode current collector)

The positive electrode current collector may include stainless steel, nickel, aluminum, titanium, or an alloy thereof. The positive electrode current collector may also include carbon, nickel, titanium, or aluminum which is surface treated with silver, or stainless steel. Though the positive electrode current collector is not limited thereto, it may be, for example, 10 $\mu m$ to 50 $\mu m$.

(Positive electrode material)

A positive electrode mixture layer may include a positive electrode active material. The positive electrode active material may include a compound which may reversibly intercalate and de-intercalate lithium ions.

According to exemplary embodiments, the positive electrode active material may include a lithium-nickel metal oxide. The lithium-nickel metal oxide may further include at least one of cobalt (Co), manganese (Mn), and aluminum (Al).

In some exemplary embodiments, the positive electrode active material or the lithium-nickel metal oxide may include a layered structure or a crystal structure represented by the following Chemical Formula 1:

[Chemical Formula 1]     $Li_xNi_aM_bO_{2+z}$

wherein $0.9 \leq x \leq 1.2$, $0.6 \leq a \leq 0.99$, $0.01 \leq b \leq 0.4$, and $-0.5 \leq z \leq 0.1$. As described above, M may include Co, Mn, and/or Al.

The chemical structure represented by Chemical Formula 1 shows a bonding relationship included in the layered structure or the crystal structure of the positive electrode active material, and it does not mean that other additional elements are excluded. For example, M includes Co and/or Mn, and Co and/or Mn may be provided as a main active element of the positive electrode active material with Ni. Chemical Formula 1 is provided for expressing the bonding relationship of the main active elements and should be understood as a formula covering introduction of an additional element and substitution.

In an exemplary embodiment, auxiliary elements which are added to the main active elements to enhance chemical stability of the positive electrode active material or the layered structure/crystal structure may be further included. The auxiliary element may be incorporated into the layered structure/crystal structure and form a bond, and in this case also, should be understood to be included in the range of the chemical structure represented by Chemical Formula 1.

The auxiliary element may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, or Zr. The auxiliary element may act as, for example, an auxiliary active element which contributes to the capacity/output activity of the positive electrode active material with Co or Mn, like Al.

For example, the positive electrode active material or the lithium-nickel metal oxide may include a layered structure or a crystal structure represented by the following Chemical Formula 1-1:

[Chemical Formula 1-1]     $Li_xNi_aM1_{b1}M2_{b2}O_{2+z}$

wherein M1 includes Co, Mn, and/or Al, M2 includes the auxiliary elements described above, and $0.9 \leq x \leq 1.2$, $0.6 \leq a \leq 0.99$, $0.01 \leq b1+b2 \leq 0.4$, and $-0.5 \leq z \leq 0.1$ are satisfied.

The positive electrode active material may further include a coating element or a doping element. For example, elements which are substantially identical or similar to the auxiliary elements described above may be used as a coating element or a doping element. For example, among the elements described above, a single element or a combination of two or more elements may be used as a coating element or a doping element.

The coating element or the doping element may be present on the surface of the lithium-nickel metal oxide particles or may have penetrated through the surface of the lithium-nickel metal composite oxide particles and included in the combined structure represented by Chemical Formula 1 or Chemical Formula 1-1.

The positive electrode active material may include a nickel-cobalt-manganese (NCM)-based lithium oxide. In this case, an NCM-based lithium oxide having an increased nickel content may be used.

Ni may be provided as a transition metal related to the output and the capacity of a lithium secondary battery. Therefore, as described above, since a high-content (high-Ni) composition is adopted into the positive electrode active material, a high-capacity positive electrode and a high-capacity lithium secondary battery may be provided.

However, as the content of Ni increases, the long-term preservation stability and the life stability of the positive electrode or the secondary battery may be relatively reduced, and a side reaction with an electrolyte may be increased. However, according to exemplary embodiments, the life stability and the capacity retention properties may be improved by Mn while maintaining the electrical conductivity by including Co.

The content of Ni in the NCM-based lithium oxide (for example, the mole fraction of nickel of the total moles of nickel, cobalt, and manganese) may be 0.6 or more, 0.7 or more, or 0.8 or more. In some exemplary embodiment, the content of Ni may be 0.8 to 0.95, 0.82 to 0.95, 0.83 to 0.95, 0.84 to 0.95, 0.85 to 0.95, or 0.88 to 0.95.

In some exemplary embodiments, the positive electrode active material may include a lithium cobalt oxide-based active material, a lithium manganese oxide-based active material, a lithium nickel oxide-based active material, or a lithium iron phosphate (LFP)-based active material (for example, $LiFePO_4$).

In some exemplary embodiments, the positive electrode active material may include a Mn-rich-based active material having a chemical structure or crystal structure represented by Chemical Formula 2, a Li rich layered oxide (LLO)/over lithiated oxide (OLO)-based active material, or a Co-less-based active material:

[Chemical Formula 2]  $p[Li_2MnO_3]\cdot(1-p)[Li_qJO_2]$

wherein $0<p<1$, $0.9\leq q\leq 1.2$, and J includes at least one element of Mn, Ni, Co, Fe, Cr, V, Cu, Zn, Ti, Al, Mg, and B.

(Method for manufacturing positive electrode)

For example, the positive electrode active material may be mixed into the solvent to prepare a positive electrode slurry. After coating the positive electrode current collector with the positive electrode slurry, drying and rolling may be performed to manufacture a positive electrode mixture layer. The coating process may be performed by a method such as gravure coating, slot die coating, multilayer simultaneous die coating, imprinting, doctor blade coating, dip coating, bar coating, and casting, but is not limited thereto. The positive electrode mixture layer may further include a binder, and may optionally further include a conductive material, a thickener, and the like. Herein, the binder and the conductive material are as described above.

(Positive electrode solvent)

A non-limiting example of the solvent used in the preparation of the positive electrode mixture may include N-methyl-2-pyrrolidone (NMP), dimethyl formamide, dimethyl acetamide, N,N-dimethylaminopropylamine, ethylene oxide, tetrahydrofuran, isobutyl butyrate, butyl butyrate, xylene, anisole, and the like.

(Positive electrode binder)

The binder may include a non-water-based binder and/or a water-based binder, or rubber-based binder and/or fluorine-based binder, and may include, for example, polyvinylidene fluoride (PVDF), poly(vinylidene fluoride-co-hexafluoropropylene (PVDF-HFP), polyacrylonitrile, polymethylmethacrylate, acrylonitrile butadiene rubber (NBR), polybutadiene rubber (BR), styrene-butadiene rubber (SBR), and the like. In an exemplary embodiment, a PVDF-based binder may be used as a positive electrode binder.

(Positive electrode conductive material)

The conductive material may be added for increasing conductivity of the positive electrode mixture layer and/or mobility of lithium ions or electrons. For example, the conductive material may be a linear conductive material and/or a dot-shaped conductive material, and may include, for example, carbon-based conductive materials such as graphite, carbon black, acetylene black, ketjen black, graphene, carbon nanotubes, vapor-grown carbon fiber (VGCF), carbon fiber, and carbon nanofiber, and/or metal-based conductive materials including tin, tin oxide, titanium oxide, perovskite materials such as $LaSrCoO_3$ and $LaSrMnO_3$, and the like, but is not limited thereto.

(Positive electrode thickener/ dispersant)

If necessary, the positive electrode mixture may further include a thickener and/or a dispersant and the like. As an exemplary embodiment, the positive electrode mixture may include a thickener such as carboxymethyl cellulose (CMC).

[Negative electrode]

The negative electrode may include a negative electrode current collector and a negative electrode mixture layer placed on at least one surface of the negative electrode current collector.

(Negative electrode current collector)

A non-limiting example of the negative electrode current collector may include a copper foil, a nickel foil, a stainless-steel foil, a titanium foil, a nickel foam, a copper foam, a polymer substrate coated with a conductive metal, and the like. The negative electrode current collector is not limited, but may be, for example, 10 to 50 $\mu$m.

(Negative electrode material)

The negative electrode mixture layer may include a negative electrode active material. As the negative electrode active material, a material capable of adsorbing or desorbing lithium ions may be used. For example, the negative electrode active material may be a carbonaceous material such as crystalline carbon, amorphous carbon, carbon composite, and carbon fiber; lithium metal; lithium alloy; a silicon (Si)-containing material, a tin (Sn)-containing material, or the like.

An example of the amorphous carbon may include hard carbon, soft carbon, coke, mesocarbon microbead (MCMB), mesophase pitch-based carbon fiber (MPCF), and the like.

An example of the crystalline carbon may include graphite-based carbon such as natural graphite, artificial graphite, graphitized coke, graphitized MCMB, and graphitized MPCF.

The lithium metal may include a pure lithium metal or a lithium metal on which a protective layer for suppressing dendrite growth and the like is formed. In an exemplary embodiment, a lithium metal-containing layer which is deposited or coated on a negative electrode current collector may be used as a negative electrode active material. In an exemplary embodiment, a lithium thin film layer may be used as a negative electrode active material layer.

An element included in the lithium alloy may include aluminum, zinc, bismuth, cadmium, antimony, silicon, lead, tin, gallium, indium, or the like.

The silicon-containing material may provide more increased capacity characteristics. The silicon-containing material may include Si, $SiO_x$ ($0<x<2$), metal-doped $SiO_x$ ($0<x<2$), a silicon-carbon composite, and the like. The metal may include lithium and/or magnesium, and the metal-doped $SiO_x$ ($0<x<2$) may include metal silicate.

(Method for manufacturing negative electrode)

For example, the negative electrode active material may be mixed into the solvent to prepare a negative electrode slurry. After coating/depositing the negative electrode current collector with the negative electrode slurry, drying and rolling may be performed to manufacture a negative electrode mixture layer. The coating process may be performed by a method such as gravure coating, slot die coating, multilayer simultaneous die coating, imprinting, doctor blade coating, dip coating, bar coating, and casting, but is not limited thereto. The negative electrode mixture layer may further include a binder, and may optionally further include a conductive material, a thickener, and the like.

In some exemplary embodiments, the negative electrode may include a negative electrode active material layer in a lithium metal form formed by a deposition/coating process.

(Negative electrode solvent)

A non-limiting example of the solvent for a negative electrode mixture may include water, pure water, deionized water, distilled water, ethanol, isopropanol, methanol, acetone, n-propanol, t-butanol, isobutyl isobutyrate, butyl butyrate, xylene, anisole, and the like.

(Negative electrode binder/ conductive material/ thickener)

As the binder, the conductive material, and the thickener, the materials described above which may be used in the manufacture of a positive electrode may be used.

In some exemplary embodiments, rubber-based binder such as a styrene-butadiene rubber (SBR)-based binder, carboxymethyl cellulose (CMC), a polyacrylic acid-based binder, a poly(3,4-ethylenedioxythiophene) (PEDOT)-based binder, and the like may be used as a negative electrode binder.

[Electrode assembly]

According to exemplary embodiments, the positive electrode, the negative electrode, and the separator may be repeatedly disposed to form an electrode assembly. In some exemplary embodiments, the electrode assembly may be a winding type, a stacking type, a zigzag (z)-folding type, or a stack-folding type.

[Electrolyte solution]

A lithium secondary battery may be defined by housing the electrode assembly in a case with an electrolyte. According to exemplary embodiments, a nonaqueous electrolyte solution may be used as the electrolyte.

(Lithium salt/ organic solvent)

A nonaqueous electrolyte solution includes a lithium salt as an electrolyte and an organic solvent, the lithium salt is represented by, for example, $Li^+X^-$, and an example of an anion ($X^-$) of the lithium salt may include $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$,

$CH_3CO_2^-$, $SCN^-$, $(CF_3CF_2SO_2)_2N^-$, and the like.

The organic solvent has sufficient solubility of the lithium salt or the additive and may include an organic compound having no reactivity in a battery. The organic solvent may include, for example, at least one of carbonate-based solvents, ester-based solvents, ether-based solvents, ketone-based solvents, alcohol-based solvents, and aprotic solvents. An example of the organic solvent may include propylene carbonate (PC), ethylene carbonate (EC), butylene carbonate, diethyl carbonate (DEC), dimethyl carbonate (DMC), ethyl methyl carbonate (EMC), methyl propyl carbonate, ethyl propyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF) and 2-methyltetrahydrofuran, ethyl alcohol, isopropyl alcohol, dimethylsulfoxide, acetonitrile, sulfolane, gamma-butyrolactone, propylene sulfite, and the like. These may be used alone or in combination of two or more.

(Additive)

The nonaqueous electrolyte solution may further include an additive. The additive may include, for example, cyclic carbonate-based compounds, fluorine-substituted carbonate-based compounds, sultone-based compounds, cyclic sulfate-based compounds, cyclic sulfite-based compounds, phosphate-based compounds, and borate-based compounds.

The cyclic carbonate-based compound may include vinylene carbonate (VC), vinylethylene carbonate (VEC), or the like.

The fluorine-substituted carbonate-based compound may include fluoroethylene carbonate (FEC) and the like.

The sultone-based compound may include 1,3-propane sultone, 1,3-propene sultone, 1,4-butane sultone, and the like.

The cyclic sulfate-based compound may include 1,2-ethylene sulfate, 1,2-propylene sulfate, and the like.

The cyclic sulfite-based compound may include ethylene sulfite, butylene sulfite, and the like.

The phosphate-based compound may include lithium difluoro bis-oxalato phosphate, lithium difluoro phosphate, and the like.

The borate-based compound may include lithium bis(oxalate) borate and the like.

[Solid electrolyte]

In some exemplary embodiment, a solid electrolyte may be used instead of the nonaqueous electrolyte solution described above. In this case, the lithium secondary battery may be manufactured in an all-solid-state battery form. In addition, a solid electrolyte layer may be placed between the positive electrode and the negative electrode, instead of the separator described above.

The solid electrolyte may include a sulfide-based electrolyte. As a non-limiting example, the sulfide-based electrolyte may include $Li_2S$-$P_2S_5$, $Li_2S$-$P_2S_5$-LiCl, $Li_2S$-$P_2S_5$-LiBr, $Li_2S$-$P_2S_5$-LiCl-LiBr, $Li_2S$-$P_2S_5$-$Li_{20}$, $Li_2S$-$P_2S_5$-$Li_{20}$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS$, (m and n are positive numbers, and Z is Ge, Zn, or Ga), $Li_2S$-$GeS_2$, $Li_2S$-$SiS_2$-$Li_3PO_4$, $Li_2S$-$SiS_2$-$Li_pMO_q$, (p and q are positive numbers, and M is P, Si, Ge, B, Al, Ga, or In), $Li_{7-x}PS_{6-x}Cl_x$ ($0{\leq}x{\leq}2$), $Li_{7-x}PS_{6-x}Br_x$ ($0{\leq}x{\leq}2$), $Li_{7-x}PS_{6-x}I_x$ ($0{\leq}x{\leq}2$), and the like. These may be used alone or in combination of two or more.

In an exemplary embodiment, the solid electrolyte may include, for example, an oxide-based amorphous solid electrolyte such as $Li_{2O}$-$B_2O_3$-$P_2O_5$, $Li_{2O}$-$SiO_2$, $Li_{2O}$-$B_2O_3$, and $Li_{2O}$-$B_2O_3$-ZnO.

[Cell structure]

For example, electrode tabs (positive electrode tab and negative electrode tab) may protrude from the positive electrode current collector and the negative electrode current collector and extend to one side of a case, respectively. The electrode tabs may be connected to electrode leads (positive electrode lead and negative electrode lead) which are fused with the one side of the case and extended or exposed to the outside of the case. For example, a pouch-type case, an angular case, a cylindrical case, a coin-type case, and the like may be used.

Hereinafter, the examples will be further described with reference to the specific experimental examples. It is apparent to those skilled in the art that the examples and the comparative examples included in the experimental examples only illustrate an exemplary embodiment and do not limit the appended claims, and various modifications and alterations of the examples may be made within the range of the scope and spirit of the present disclosure, and these modifications and alterations will fall within the appended claims.

**Test method**

**1. Viscosity average molecular weight (Mv, unit: g/mol)**

The viscosity average molecular weight of a polyolefin was obtained by measuring intrinsic viscosity ($\eta$) with a Crystex® model available from Polymer Char (solvent: trichlorobenzene (TCB)) and then performing calculation of the following Margolies equation:

Viscosity average molecular weight (Mv) = $5.37 \times 10^4 \times [\eta]^{1.49}$          [Mathematical Formula 1]

**2. Thickness ($\mu$m)**

The thickness of the microporous membrane was measured using a TESA Micro-Hite Electronic Gauge available from TESA, which is a contact type thickness gauge having a precision degree of 0.1 $\mu$m, and measurement pressure was 0.63 N.

**3. Perforation strength (N/$\mu$m)**

The perforation strength of the microporous membrane was measured at a speed of 120 mm/min using a Universal Test Machine (UTM) 3345 available from INSTRON, and a pin tip having a diameter of 1.0 mm and a radius of curvature of 0.5 mm was used at this time.

**4. Gas permeability ($\times 10^{-5}$ Darcy; approx. $\times 10^{-5}$ $\mu$m$^2$)**

The gas permeability of the microporous membrane was measured using a CFP-1500-AEL available from PMI, which is a porosimeter. In the examples, the gas permeability was calculated through the following Darcy's permeability constant (C), as an average value of the Darcy's permeability constant in a range of 100 psi to 200 psi:

$$[\text{Mathematical Formula 2}]$$

$$C = (8F \times T \times V)/[\pi D^2 (P^2 - 1)]$$

wherein C: Darcy's permeability constant,
F: flow velocity (cc/min),
T: thickness of the microporous membrane (mm),
V: viscosity of gas (N$_2$) (0.185 cP),
D: diameter of microporous membrane (mm), and
P: pressure (psi).

**5. Porosity $\varepsilon$**

The porosity $\varepsilon$ of the microporous membrane was determined by calculating the space inside the microporous membrane. Specifically, the porosity $\varepsilon$ was calculated by the following equation 2, using mass (m, unit: g), measured after cutting a microporous membrane sample into a rectangular shape of A cm $\times$ B cm (thickness: T, unit: $\mu$m), and polyolefin density ($\rho$, unit: g/cm$^3$) :

$$[\text{Equation 2}]$$

$$\text{Porosity } \varepsilon = \{1-(m \times 10000)/(A \times B \times T \times \rho)\}$$

**6. Average pore size (nm)**

The average pore size of the microporous membrane was measured using a CFP-1500-AEL available from PMI which is a porosimeter in accordance with ASTM F316-03. The measurement was performed through a half dry method, and a Galwick solution provided by PMI (surface tension: 15.9 dyne/cm) was used.

**7. Shrinkage rates in MD and TD (MD/TD, %) at 120°C for 1 hour**

The shrinkage rates in the transverse direction (TD) and in the machine direction (MD) were calculated according to the following Mathematical Formula 4, by cutting the microporous membrane into a size of 15 cm×15 cm, marking the membrane at each 10 cm point in the machine direction (MD) and in the transverse direction (TD), putting the membrane between papers, placing the membrane in an oven (Yamato, DKN612) of which the temperature was stabilized to 120°C, leaving the membrane for 1 hour, and measuring a change in intervals (initial interval: 10 cm):

Shrinkage rate = 100 × (initial interval - interval after leaving at 120°C) / initial interval        [Mathematical Formula 4]

**8. BDV index**

The BDV index was calculated by the following Equation 1:

$$[\text{Equation 1}]$$

$$\text{BDV index} = \left( \frac{(P^2 + \sqrt[4]{M})}{D \times \sqrt{d} \times \sqrt{\varepsilon}} \right) \times 100$$

P: perforation strength (N/um) of the microporous membrane,
M: viscosity average molecular weight ($\times 10^5$ g/mol) of polyolefin,
D: gas permeability ($\times 10^{-5}$ Darcy; approx. $\times 10^{-5}$ $\mu m^2$) of the microporous membrane,
d: average pore size (nm) of the microporous membrane, and
$\varepsilon$: porosity of the microporous membrane.

**9. Break-down voltage (kV/$\mu$m)**

The break-down voltage of the microporous membrane was measured in accordance with ASTM D149, and evaluated as a voltage (kV) when a leakage current value was 5 mA which was measured under the conditions of placing the separator between electrodes of a withstand voltage tester (Croma, model 19052) under a dry room (dew point temperature: -60°C) and then raising an applied voltage to 5 kV/10 sec.
In addition, the total average thickness (t, $\mu$m) of the microporous membrane was obtained by overlapping the microporous membrane in 8 layers, measuring each thickness at 5 random points in the TD direction by a thickness meter available from Mitutoyo, dividing the value by 5 to derive an average thickness of the 8-layer microporous membrane, and dividing the value by 8 again to derive a total average thickness of a single microporous membrane.
Thereafter, to compare the calculated break-down voltage with the thickness, a BDV/t value which is a ratio of the calculated break-down voltage (BDV) to the total average thickness (t) of the microporous membrane was calculated.

**10. Hot-box evaluation**

The hot-box evaluation was performed using a battery assembled as follows to which the microporous membrane was applied as a separator.
Manufacture of positive electrode: 92 wt% of a lithium cobalt composite oxide (LiCoO$_2$) as a positive electrode active material, 4 wt% of carbon black as a conductive material, and 4 wt% of polyvinylidene fluoride (PVdF) as a binder were added to N-methyl-2-pyrrolidone (NMP) as a solvent to prepare a positive electrode mixture slurry. The prepared slurry was applied on an aluminum (Al) thin film having a thickness of 30 $\mu$m and dried at a temperature of 120°C, and roll-pressing was performed to manufacture a positive electrode having a thickness of 140 $\mu$m.
Manufacture of negative electrode: 96 wt% of graphite carbon, 3 wt% of PVdF as a binder, and 1 wt% of carbon black as a conductive material were added to NMP as a solvent to prepare a negative electrode mixture slurry. The prepared slurry was applied on a copper (Cu) thin film having a thickness of 20 $\mu$m, dried at 120°C, and roll-pressed to manufacture a negative electrode having a thickness of 150 $\mu$m.
A pouch type battery was assembled by stacking the manufactured separator between the positive electrode and the negative electrode, and an electrolyte solution of ethylene carbonate (EC)/ ethyl methyl carbonate (EMC)/ dimethyl carbonate (DMC) = 3:5:2 (volume ratio) in which 1M lithium hexafluorophosphate (LiPF$_6$) was dissolved was injected into each assembled battery to manufacture a lithium secondary battery. Thus, a pouch type lithium secondary battery having a capacity of 2 Ah was manufactured.
The assembled battery was subjected to aging and degassing operations, fully charged to 4.2 V, put into an oven, heated in 5°C increments to reach 130°C, and allowed to stand for 30 minutes, thereby measuring a battery change. After allowing the battery to stand at 130°C for 30 minutes, when fuming or ignition occurred in the battery, it was determined as "Fail", and when no change in voltage/current of the battery and fuming and ignition did not occur, it was determined as "Pass".

**11. Overcharge evaluation**

In the overcharge evaluation, safety against overcharging was confirmed by, in an insulated chamber, applying a current of 200 mA to the battery manufactured in 10. Hot-box evaluation to charge the battery to 4.2 V, discharging the battery at a current of 200 mA to 3V to charge/discharge the battery in one cycle, applying a constant current of 1000 mA to charge the battery to 4.2 V, maintaining the voltage constant to allow the battery to stand until the charging current was 30 mA or less, raising the voltage to 5.0 V at 1000 mA, and observing the appearance of the battery and battery temperature change while maintaining the voltage for 2 hours. When fuming/ignition occurred, it was determined as "Fail", and when no fuming/ignition occurred, it was determined as "Pass".

**12. Initial resistance evaluation**

The initial resistance evaluation was performed using the battery manufactured in 10. When the initial resistance was 54 mΩ or less, the capacity was maintained at 50% or more in a 2C-rate discharge test, and thus, the initial resistance value was an evaluation indicator for battery output characteristics.

**<Example 1> Manufacture of microporous membrane**

30 wt% of polyethylene (viscosity average molecular weight: $6 \times 10^5$ g/mol) and 70 wt% of a diluent were melted and kneaded through an extruder to prepare a molten material which was a thermodynamically single phase, and then the molten material was molded into a sheet form using a cooling roll. Next, the sheet was stretched 9 fold in the machine direction (MD) at 90°C, stretched 11 fold in the transverse direction (TD) in the pre-heating (PH; applying heat without stretching)-stretching (ST; applying heat to perform stretching)- heat-setting (HS; applying only heat to the stretched sheet without stretching/relaxation) at 117°C, 120°C, and 124°C, respectively, extracting the diluent, and transferring the sheet to a drying roll to dry the sheet. The dried film was stretched (1.55 fold) at 134°C-heat fixation-relaxed (0.87 fold) to manufacture a microporous membrane having a thickness of 9.4 μm.

**<Examples 2 to 4>**

Microporous membranes were manufactured in the same manner as in Example 1, referring to the following Table 1:

**<Comparative Examples 1 to 7>**

Microporous membranes were manufactured in the same manner as in Example 1, referring to the following Table 2:

[Table 1]

| Example | 1 | 2 | 3 | 4 |
|---|---|---|---|---|
| PO Mv ($\times 10^5$ g/mol) | 6 | 10 | 20 | 15 |
| PO content (wt%) | 30 | 25 | 17 | 19 |
| Diluent content (wt%) | 70 | 75 | 83 | 81 |
| MD stretching temperature (°C) | 90 | 85 | 80 | 80 |
| MD stretching ratio | 9.0 | 8.0 | 8.5 | 9.5 |
| TD stretching temperature (PH/ST/HS, °C) | 117/120/124 | 118/122/126 | 122/125/129 | 123/126/130 |
| TD stretching ratio | 11.0 | 9.0 | 10.0 | 12.0 |
| MD/TD stretching ratio | 0.82 | 0.89 | 0.85 | 0.79 |
| Heat fixation temperature (°C) | 134.0 | 135.5 | 137.0 | 137.5 |

(continued)

| Example | 1 | 2 | 3 | 4 |
|---|---|---|---|---|
| Heat fixation stretching ratio | 1.55 | 1.50 | 1.50 | 1.50 |
| Heat fixation relaxation ratio | 0.87 | 0.86 | 0.90 | 0.86 |

[Table 2]

| Comparative Example | 1 | 2 | 3 | 4 | 5 | 6 | 7 |
|---|---|---|---|---|---|---|---|
| PO Mv($\times 10^5$ g/mol) | 3 | 6 | 10 | 6 | 20 | 10 | 15 |
| PO content (wt%) | 30 | 30 | 25 | 30 | 17 | 25 | 19 |
| Diluent content (wt%) | 70 | 70 | 75 | 70 | 83 | 75 | 81 |
| MD stretching temperature (°C) | 100 | 90 | 110 | 100 | 80 | 100 | 85 |
| MD stretching ratio | 10.0 | 10.0 | 10.0 | 9.0 | 9.5 | 8.0 | 10.0 |
| TD stretching temperature (PH/ST/HS, °C) | 120/123/126 | 121/121/121 | 124/124/124 | 119/122/125 | 126/126/126 | 120/124/128 | 125/125/125 |
| TD stretching ratio | 10.0 | 9.0 | 8.0 | 11.0 | 10.0 | 10.0 | 10.0 |
| MD/TD stretching ratio | 1.0 | 1.1 | 1.25 | 0.82 | 0.95 | 0.8 | 1.0 |
| Heat fixation temperature (°C) | 133 | 132 | 136 | 135 | 139 | 136.5 | 137 |
| Heat fixation stretching ratio | 1.5 | 1.5 | 1.6 | 12 | 1.5 | 1.5 | 1.5 |
| Heat fixation relaxation ratio | 0.93 | 0.90 | 0.86 | 0.91 | 0.93 | 0.86 | 0.86 |

The microporous membranes according to the examples and the comparative examples and the batteries manufactured using the membranes were evaluated according to the above test methods, and the results are shown in the following Tables 3 to 6:

[Table 3]

| Example | 1 | 2 | 3 | 4 |
|---|---|---|---|---|
| Thickness ($\mu$m) | 9.4 | 10.1 | 7.8 | 9.1 |
| Perforation strength (N/$\mu$m) | 0.54 | 0.56 | 0.60 | 0.67 |
| Gas permeability ($\times 10^{-5}$ Darcy) | 3.1 | 3.2 | 3.2 | 3.4 |
| Porosity | 0.39 | 0.40 | 0.42 | 0.43 |
| Average pore size (nm) | 38.5 | 39.8 | 37.6 | 40.5 |
| Shrinkage rate at 120°C for 1 hr (MD/TD, %) | 7.5/4.5 | 5.1/4.7 | 6.2/8.8 | 6.3/9.0 |
| BDV index | 15.6 | 16.4 | 19.4 | 17.0 |
| Break-down voltage (kV/$\mu$m) | 0.136 | 0.151 | 0.164 | 0.155 |

[Table 4]

| Comparative Example | 1 | 2 | 3 | 4 | 5 | 6 | 7 |
|---|---|---|---|---|---|---|---|
| Thickness ($\mu$m) | 11.2 | 11.7 | 9.5 | 8.9 | 8.3 | 8.7 | 10.5 |
| Perforation strength (N/$\mu$m) | 0.37 | 0.31 | 0.58 | 0.57 | 0.58 | 0.54 | 0.64 |
| Gas permeability ($\times 10^{-5}$ Darcy) | 3.2 | 4.0 | 2.3 | 2.4 | 4.0 | 2.2 | 3.3 |
| Porosity | 0.47 | 0.44 | 0.35 | 0.37 | 0.48 | 0.36 | 0.42 |
| Average pore size (nm) | 35.5 | 44.1 | 42.8 | 35.1 | 38.9 | 44.3 | 41.2 |
| Shrinkage rate at 120°C for 1 hr (MD/TD, %) | 9.0/11.7 | 7.5/12.3 | 5.6/11.9 | 6.5/10.9 | 6.2/20.0 | 4.2/3.2 | 7.1/13.5 |
| BDV index | 11.1 | 9.5 | 19.5 | 21.2 | 14.1 | 23.6 | 17.3 |
| Break-down voltage (kV/$\mu$m) | 0.115 | 0.109 | 0.149 | 0.149 | 0.128 | 0.178 | 0.159 |

[Table 5]

| Example | 1 | 2 | 3 | 4 |
|---|---|---|---|---|
| Initial resistance (m$\Omega$) | 53 | 51 | 51 | 49 |
| Overcharge evaluation | Pass | Pass | Pass | Pass |
| Hot-box evaluation | Pass | Pass | Pass | Pass |

[Table 6]

| Comparative Example | 1 | 2 | 3 | 4 | 5 | 6 | 7 |
|---|---|---|---|---|---|---|---|
| Initial resistance (m$\Omega$) | 51 | 40 | 64 | 62 | 40 | 64 | 50 |
| Overcharge evaluation | Fail | Fail | Pass | Pass | Fail | Pass | Pass |
| Hot-box evaluation | Fail | Fail | Fail | Fail | Fail | Pass | Fail |

As confirmed from the findings summarized in Tables 3 to 6, the secondary batteries including the polyolefin-based microporous membranes according to the Examples which satisfied the gas permeability of $2.5 \times 10^{-5}$ Darcy or more (approx. $2.5 \times 10^{-5}$ $\mu$m$^2$ or more), the shrinkage rate in the transverse direction (TD) at 120°C of 10% or less, and the BDV index of 15 or more simultaneously all had a low initial resistance of 54 m$\Omega$ or less and thus, had excellent charge/discharge characteristics, and had better insulation properties and higher safety at high voltage and/or high temperature than the secondary batteries including the polyolefin-based microporous membranes according to the Comparative Examples. While Examples 1 to 4 all passed the hot-box evaluation test, Comparative Examples 1 to 5 and Comparative Example 7 did not (cf. Table 6). Albeit that Comparative Example 6 could pass the hot-box evaluation test, it shows an unsatisfactory initial electrical resistance of 64 m$\Omega$.

The polyolefin-based microporous membrane according to an exemplary embodiment satisfies a gas permeability of $2.5 \times 10^{-5}$ Darcy or more (approx. $2.5 \times 10^{-5}$ $\mu$m$^2$ or more), a shrinkage rate in the transverse direction (TD) at 120°C of 10% or less, and a BDV index represented by the following Equation 1 of 15 or more simultaneously, thereby improving the strength and permeability or insulation properties of the membrane simultaneously. Therefore, when the polyolefin-based microporous membrane according to the exemplary embodiment is used as a separator, battery stability may be improved.

The above description is only an example to which the principle of the present disclosure is applied, and other constitutions may be further included without departing from the scope of the present disclosure. Hereinabove, though an implementation has been described in detail by the examples and the experimental examples, the scope of an implementation is not limited to specific examples and should be construed by the appended claims.

## Claims

1. A polyolefin-based microporous membrane comprising a polyolefin-based resin, wherein the polyolefin-based microporous membrane has a gas permeability of $2.5 \times 10^{-5}$ Darcy or more (approx. $2.5 \times 10^{-5}$ $\mu$m$^2$ or more), a shrinkage rate in the transverse direction (TD) at 120°C of 10% or less, and a BDV index represented by the following Equation 1 of 15 or more:

[Equation 1]

$$\text{BDV index} = \left( \frac{(P^2 + \sqrt[4]{M})}{D \times \sqrt{d} \times \sqrt{\varepsilon}} \right) \times 100$$

wherein

P: perforation strength (N/um) of the polyolefin-based microporous membrane,
M: viscosity average molecular weight ($\times 10^5$ g/mol) of polyolefin,
D: gas permeability ($\times 10^{-5}$ Darcy; approx. $\times 10^{-5}$ $\mu$m$^2$) of the polyolefin-based microporous membrane,
d: average pore size (nm) of the polyolefin-based microporous membrane, and
$\varepsilon$: porosity of the polyolefin-based microporous membrane.

2. The polyolefin-based microporous membrane of claim 1, wherein the polyolefin-based resin has a viscosity average molecular weight of $3 \times 10^5$ g/mol to $50 \times 10^5$ g/mol.

3. The polyolefin-based microporous membrane of claim 1 or 2, wherein the polyolefin-based microporous membrane has a break-down voltage (BDV) to an average thickness of 0.13 kV/um or more, the break-down voltage being measured in accordance with ASTM D149.

4. The polyolefin-based microporous membrane of any one of claims 1 to 3, wherein the polyolefin-based microporous membrane has a perforation strength of 0.4 N/$\mu$m or more.

5. The polyolefin-based microporous membrane of claim 1, wherein the porosity of the polyolefin-based microporous membrane is calculated by the following Equation 2, using mass (M, g) measured after cutting the polyolefin-based microporous membrane into a rectangular shape of which length $\times$ width is A cm $\times$ B cm (thickness: T, $\mu$m), and density ($\rho$, g/cm$^3$) of the polyolefin:

[Equation 2]

Porosity = {1-(M × 10000)/(ABTρ)}.

6. The polyolefin-based microporous membrane of any one of claims 1 to 5, wherein the polyolefin-based microporous membrane has a porosity $\varepsilon$ of 0.2 (20%) or more.

7. The polyolefin-based microporous membrane of claims 1 to 6, wherein the polyolefin-based microporous membrane has a thickness of 3 $\mu$m to 20 $\mu$m.

8. The polyolefin-based microporous membrane of any one of claims 1 to 7, wherein the polyolefin-based microporous membrane has an average pore size of 10 nm to 100 nm as measured in accordance with ASTM F316-03.

9. The polyolefin-based microporous membrane of any one of claims 1 to 8, wherein a shrinkage rate in the machine direction (MD) at 120°C is 10% or less.

10. A method for manufacturing a polyolefin-based microporous membrane according to one of claims 1 to 9, the method comprising:

kneading a polyolefin-based resin and a diluent to prepare a molten material;
molding the molten material into a sheet form; and
stretching the molded sheet and then extracting the diluent,

11. The method for manufacturing a polyolefin-based microporous membrane of claim 10, wherein the stretching of the molded sheet includes stretching 6 fold to 15 fold in the machine direction (MD) at a temperature of 60°C to 130°C, and/or
wherein the stretching of the molded sheet further includes stretching 6 fold to 15 fold in the transverse direction (TD) at a temperature of 80°C to 130°C.

12. The method for manufacturing a polyolefin-based microporous membrane of any one of claims 10 to 11, wherein a stretching ratio (MD/TD) in the machine direction (MD) and the transverse direction (TD) is less than 1.0.

13. The method for manufacturing a polyolefin-based microporous membrane of any one of claims 10 to 12, further comprising drying, after extracting of the diluent,
and/or
further comprising heat fixing at a temperature of 100°C to 150°C, after extracting of the diluent.

14. A separator comprising a polyolefin-based microporous membrane as defined by any one of claims 1 to 9, or as obtained by the method for manufacturing a polyolefin-based microporous membrane according to any one of claims 10 to 13.

15. A secondary battery comprising the separator of claim 14.

FIG. 1

FIG. 2

FIG. 3

Europäisches
Patentamt
European
Patent Office
Office européen
des brevets

# EUROPEAN SEARCH REPORT

Application Number

EP 25 18 6343

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/148685 A1 (KANG GWIGWON [KR] ET AL) 11 June 2009 (2009-06-11) * claim 1 * ----- | 1-15 | INV. H01M50/406 H01M50/417 H01M50/489 H01M50/491 H01M50/494 H01M10/0525 B01D69/02 B01D71/26 C08J5/18 |

TECHNICAL FIELDS
SEARCHED (IPC)

H01M
B01D
C08J

The present search report has been drawn up for all claims

| Place of search | Date of completion of the search | Examiner |
|---|---|---|
| Munich | 5 December 2025 | Steinreiber, J |

EPO FORM 1503 03.82 (P04C01)

## ANNEX TO THE EUROPEAN SEARCH REPORT
## ON EUROPEAN PATENT APPLICATION NO.

EP 25 18 6343

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2025

| Patent document cited in search report | Publication date | Patent family member(s) | | Publication date |
|---|---|---|---|---|
| US 2009148685 A1 | 11-06-2009 | CN | 101445624 A | 03-06-2009 |
| | | CN | 102339965 A | 01-02-2012 |
| | | EP | 2065953 A1 | 03-06-2009 |
| | | JP | 5127671 B2 | 23-01-2013 |
| | | JP | 5595459 B2 | 24-09-2014 |
| | | JP | 2009132904 A | 18-06-2009 |
| | | JP | 2013032535 A | 14-02-2013 |
| | | KR | 20090055067 A | 02-06-2009 |
| | | US | 2009148685 A1 | 11-06-2009 |